# EUROPEAN PATENT SPECIFICATION

(11) **EP 2 641 464 B1**
(45) Date of publication and mention of the grant of the patent: **18.12.2019**
(21) Application number: 11841078.6
(22) Date of filing: 18.05.2011
(51) Int. Cl.: A01G 9/02

(54) **ANTI-PENETRATION AND GAS PERMEABLE POTTED CONTAINER AND PREPARATION METHOD THEREOF**
PENETRATIONSHEMMENDER UND GASDURCHLÄSSIGER PFLANZENTOPF UND SEIN HERSTELLUNGSVERFAHREN
RÉCIPIENT DE PLANTATION ANTI-PÉNÉTRATION ET PERMÉABLE AUX GAZ ET SON PROCÉDÉ DE FABRICATION

(30) Priority: 19.11.2010 CN 201010550870; 19.11.2010 CN 201010551216
(43) Date of publication of application: 25.09.2013
(73) Proprietor: Beijing Rechsand Science & Technology Group Co., Ltd, Beijing 100085 (CN)
(72) Inventor: QIN, Shengyi, Haidian District Beijing 100085 (CN); HU, Wenxing, Haidian District Beijing 100085 (CN); WANG, Zhenbang, Beijing 100085 (CN)
(74) Representative: Groth & Co. KB
(86) International application number: PCT/CN2011/000868
(87) International publication number: WO 2012/065350

(56) References cited:
- CN-A- 1 189 965
- CN-A- 101 838 116
- CN-A- 101 965 789
- FR-A- 1 343 506
- FR-A1- 2 383 600
- GB-A- 1 478 198

## Description

### Technical Field

The present invention relates to pot culture, especially relates to anti-penetration gas permeable potting container, preparation method thereof, potting planting container and potting.

### Background of the Invention

Potting is used widely in various fields of life, being set at both home and office spaces. The potting container in prior art, mostly made from sintering inorganic materials, has dense structure and is not gas-permeable. Small air holes are usually opened on the bottom of the container to ensure the gas permeability. However, while watering, the water poured into the potting is leaked out through the air holes rapidly, thus sufficient circumferential infiltration of water throughout the entire potting cannot be achieved, which leads to insufficient irrigation of the root system of the potting; besides, soil inside the potting container is also leaked out through the small holes, which leads to contamination of the room environment, and continuous supplementary watering is required because of water leakage, which is a waste of water resource.

To solve the problem of insufficient anti-penetration of the potting container in prior art, some anti-penetration materials are placed at the bottom of the potting container. However, although these anti-penetration materials can provide anti-penetration effect, their gas permeability is poor, which results in rot of the plant roots and withering of the plant. Chinese patent CN101455163A disclosed a novel environment-friendly potting container and materials thereof, with water-saving and cleaning properties. Specifically, its inner wall is made of a Super Absorbent Polymer (SAP) with good water-absorbing capacity, and its outer wall is made of waterproof material. This potting container has good water-absorbing and water-retention property. However, besides enough water, sufficient gas permeability is also needed for the growth of the plant. The materials of the inner and outer walls of this potting container can only ensure the water-absorbing capacity, leaving the potting container with poor gas permeability. Poor gas permeability of the potting container will lead to insufficient ventilation of the plant, especially for its roots, thus resulting in some problems such as rot of the plant roots and withering of the plant.

To ensure both gas permeability and water-saving property, Chinese patent CN2442503Y disclosed an ecological environment-friendly potting planting container, which includes a container body without drain holes at the bottom, a mesh laminate at the lower middle part of the container body which separates the container body into an upper soil planting layer and a lower water-storage and fertilizer-storage layer, and bucket-shaped watering holes at the junction of the container body and the mesh laminate. The mesh laminate is a horn-shaped mesh layer mounted at the lower middle part of the container body and is deep into the bottom of the container body. An inner draining ventilation layer is formed between the upper middle part of the horn-shaped mesh layer and the container body, and outer air holes are opened on the wall of the inner draining ventilation layer above the bucket-shaped watering holes. The ventilation layer and air holes of the potting planting container can meet the needs of breath of the plant roots, and the bottom without draining holes can prevent contamination to the environment. However, the watering holes are set at the junction of the container body and the mesh laminate, thus, watering from the watering holes can only meet the needs of the water-storage and fertilizer-storage layer, and the plant roots can only acquire fertilizer and nutrient after growing through the mesh layer into the water-storage layer. Moreover, this potting planting container has a mesh layer, which will damage the plant roots when transplanting the potted plant.

FR 2 383 600 discloses is a resin-aggregate mixture comprising polyurethane resin, aggregate (sand), silane compounds, iron oxide and powdered thermoplastic resins. Flower pots from this composition are cured either with a tertiary amine, base, or metallic ion. FR 2 383 600 discloses that the cured pots subsequently are baked at a temperature sufficient to fuse the thermoplastic resin to provide a pot having air permeability but resistance to the permeation of water.

Chinese patent CN2643641Y disclosed a water-storage gas permeable potting container, which includes a container body and an inverted water-storage cap covered in the container body, draining holes opened on the lateral wall of the container body, small air holes dispersed densely above the draining holes, and water inlet and outlet holes set at the lateral wall and the bottom of the water-storage cap. The key element is watering pipes mounted inside the potting container, with upper ends aligned with the upper aperture edge of the container body and lower ends stretching through the water-storage cap. This potting container partly solved the problem of less water-storage and poor gas permeability. When this potting container is being watered, water is stored inside the water-storage cap through the watering pipes, and supplied to the plant through capillarity of the potting soil. If the volume of water is saturated, excess water is drained through the draining holes. However, the water infiltration of this structure is from bottom to top, which is much slower than that of from top to bottom. Moreover, draining holes are opened on the lateral wall of the container body to allow excess water outflow, which not only reduces the aesthetics of the potting container, but also contaminates room environment.

### Summary of the Invention

The present invention aims at solving the problem that the potting container of prior art cannot ensure water-saving, gas permeability and water-retention, and thus provide a potting container with all the properties of anti-penetration, gas permeability and water-retention.

The second objective of the present invention is to provide a preparation method of the aforementioned anti-penetration and gas permeable potting container.

The third objective of the present invention is to provide a potting planting container using the aforementioned anti-penetration and gas permeable potting container.

The fourth objective of the present invention is to provide a potting using the aforementioned potting planting container.

Therefore, the present invention provides an anti-penetration and gas permeable potting container, with an open-ended cavity. The potting container is made by bonding aggregate particles with hydrophobic binder, and pores which allow gas molecules to penetrate and liquid water molecules not to penetrate are formed between adjacent aggregate particles.

The diameters of said pores between adjacent aggregate particles are 0.001 ∼0.3mm, preferably 0.01 ∼0.2mm.

The aggregate particles are selected from the group consisting of quartz sand, slag, ceramsite and glass beads; the grain sizes of the aggregate particles are 0.04∼0.85mm.

The hydrophobic binder is selected from the group consisting of fluorine-containing epoxy resinous binder, silicon-containing epoxy resinous binder, organic silicon binder, polyurethane, polyester resin and phenolic resin.

The aggregate particles are coated with hydrophobic substance.

The amount of the hydrophobic substance is 1∼8wt.% of the aggregate particles.

The hydrophobic substance is hydrophobic resin film coated on the aggregate particles, and said hydrophobic resin film is formed from hydrophobic epoxy resin, phenolic resin, polyurethane resin, silicon resin or mixtures thereof.

The hydrophobic substance is selected from the group consisting of polytetrafluoroethylene, plant oil, silicone, siloxane, hydrocarbon and copolymer of polyvinylidene chloride.

The hydrocarbon is selected from the group consisting of paraffin, kerosene, diesel, crude oil, petroleum distillate, solvent oil and aliphatic solvent.

The present invention also provides a preparation method of the aforementioned potting container, which includes the following steps,
a. mixing aggregate particles with hydrophobic binder, and pouring the mixture into a blender to stir uniformly;
b. pouring the aggregate particles coated with hydrophobic binder into a forming mould of potting container;
c. curing-molding said aggregate particles coated with hydrophobic binder and demolding to obtain the potting container.

The aggregate particles are coated with hydrophobic substance.

In the curing-molding step, said aggregate particles coated with hydrophobic binder in potting container are placed at a temperature of 5 ∼120°C for 1∼48 hours, preferably at room temperature for 2∼4 hours.

The present invention also provides a potting planting container using the potting container, being provided with a cultivating layer. A base anti-penetration layer, formed of waterproof gas permeable particles, is provided between the potting container and the bottom of the cultivating layer, and pores which allow gas molecules to penetrate and liquid water molecules not to penetrate are formed between adjacent waterproof gas permeable particles and distributed thoroughly on the base anti-penetration layer.

A lateral anti-penetration layer, formed of waterproof gas permeable particles, is provided between the wall of the potting container and the lateral side of the cultivating layer, and pores which allow gas molecules to penetrate and liquid water molecules not to penetrate are formed between adjacent waterproof gas permeable particles and distributed thoroughly on the lateral anti-penetration layer.

The waterproof gas permeable particles include aggregate particles and hydrophobic substance coated on the aggregate particles.

The aggregate particles selected from the group consisting of quartz sand, slag, ceramsite and glass beads; the grain sizes of the aggregate particles are 0.04∼0.85mm.

The cultivating layer includes crude sand in upper part and organic matter in lower part, the crude sand is aeolianite, and the organic matter is animal waste and/or kitchen waste.

The present invention also provides a potting, which includes the potting planting container; and a plant is planted in the potting planting container, especially the plant is planted in the cultivating layer above the base anti-penetration layer.

The hydrophobic substance of the present invention is hydrophobic resin film, which is formed from hydrophobic epoxy resin, phenolic resin, polyurethane resin, silicon resin or mixtures thereof. Preferably, said hydrophobic epoxy resin is selected from the group consisting of glycidyl ether epoxy resin, glycidyl ester epoxy resin, glycidyl amine epoxy resin, linear aliphatic epoxy resin, cycloaliphatic epoxy resin, polysulfide rubber modified epoxy resin, polyamide resin modified epoxy resin, polyvinyl alcohol tertiary butyl aldehyde modified epoxy resin, butyronitrile rubber modified epoxy resin, phenolic resin modified epoxy resin, polyester resin modified epoxy resin, melamine urea-formaldehyde resin modified epoxy resin, furfural resin modified epoxy resin, vinyl resin modified epoxy resin, isocyanate modified epoxy resin and silicon resin modified epoxy resin; the hydrophobic phenolic resin is selected from the group consisting of dimethylbenzene modified phenolic resin, epoxy modified phenolic resin and organic silicon modified phenolic resin.

Furthermore, the hydrophobic resin can be obtained through the following modification method:
Epoxy, such as phthalic anhydride or maleic anhydride, is copolymerized with oil soluble monomer, which is alkyl acrylates, alkyl methacrylate, ethyl acrylic acid, vinyl acetate, allyl acetate, sodium ethylenesulphonate, methyl vinyl ether, methyl allyl ether, dimethylaminoethyl methacrylate, dimethylaminoethyl acrylate, dimethylamino propyl acrylate, diethylamino propyl acrylate, dimethylamino butyl acrylate, dimethylaminoethyl methacrylate or diethylaminoethyl methacrylate.

Alternatively, epoxy resin is graft modified to form graft polymer; the hydrophilic group of epoxy resin, such as hydroxyl, is reacted with hydrophobic functional monomer to be connected. The hydrophobic functional monomer is benzaldehyde or alkyl benzaldehyde (a broad category), and the reaction between hydroxyl and aldehyde group is utilized.

Alternatively, epoxy resin undergoes substitution reaction, by means of bringing chlorine into substitution reaction under photo-catalysis to connect halogen to epoxy, so as to improve hydrophobic property.

Moreover, curing agents can be added into the hydrophobic resin film, and different curing agents are added into different resins, wherein, the choices of curing agents are as follows:
For glycidyl ether epoxy resin, glycidyl ester epoxy resin, glycidyl amine epoxy resin, linear aliphatic epoxy resin, cycloaliphatic epoxy resin, polysulfide rubber modified epoxy resin, polyamide resin modified epoxy resin, polyvinyl alcohol tertiary butyl aldehyde modified epoxy resin, butyronitrile rubber modified epoxy resin, phenolic resin modified epoxy resin, polyester resin modified epoxy resin, melamine urea-formaldehyde resin modified epoxy resin, furfural resin modified epoxy resin, vinyl resin modified epoxy resin, isocyanate modified epoxy resin or silicon resin modified epoxy resin, the preferred curing agent is aliphatic amine, cycloaliphatic amine, aromatic amine, polyamide, acid anhydride, tertiary amine or mixtures thereof;
For dimethylbenzene modified phenolic resin, epoxy modified phenolic resin or organic silicon modified phenolic resin, the preferred curing agent is hexamethylene tetramine;
For organic silicon resin, the preferred curing agent is dibutyltin dilaurate, N, N, N', N'-tetramethyl guanidine salt, or mixtures thereof;
For hydrophobic polyurethane resin, the curing agent is adduct of toluene diisocynate (TDI) and trimethoprim (TMP), prepolymer of TDI and hydroxyl-containing components, mono-component moisture curing agent or tripolymer of TDI.

For unsaturated polyester (polymer of terephthalic acid and glycol), the curing agent added at room temperature is dioxirane or cobalt naphthenate; the curing agent added while heating is tert-butyl peroxybenzoate, peroxydicarbonate, dialkyl peroxide, peroxide octylic acid tert-hexyl ester, peroxydicarbonate diester or mixtures thereof.

Moreover, the hydrophobic substance can also be polytetrafluoroethylene, plant oil, silicone, siloxane, hydrocarbon, co-polyvinylidene chloride, and mixtures thereof. Preferably, the hydrocarbon is selected from the group consisting of paraffin, kerosene, diesel, crude oil, petroleum distillate, solvent oil, and aliphatic solvent.

Wherein, the hydrophobic substance is coated onto the aggregate particles, and the coating method is spraying, dipping, or chemical coating by immersing aggregate particles in the liquid solution of the hydrophobic substance; or coating thin film sheets of hydrophobic substance onto aggregate particles; or fusing hydrophobic substance into aggregate particles by placing heated aggregate particles in the hydrophobic substance; or electroplating, plasma spraying, sputtering, fluidization, as well as powder coating.

The technical solutions of the present invention have the following advantages, compared to prior art,
The potting container of the present invention is made by bonding aggregate particles with hydrophobic binder, and the grain sizes of the aggregate particles are 0.04∼0.85mm. Material science tells us that, the sizes of pores between particles are generally at the same (or adjacent) order of magnitude as the sizes of the particles. The pore sizes between aggregate particles after bonding are at the magnitude of 10⁻¹∼10⁻³mm. As shown under microscopy, the pore sizes between the aggregate particles constituting the potting container of the present invention are between 0.001∼0.3mm. The sizes of gas molecules (O₂, CO₂, etc.) in the air are below the order of magnitude of 10⁻¹mm, thus gas molecules in the air can easily pass through surface pores of the potting container of the present invention, ensuring gas permeability of the potting container. Compared to potting containers of prior art made from sintering inorganic materials, this potting container has a relatively sparser body structure and better gas permeability.

It is revealed through comparative experiments with ordinary potting containers that the potting container of the present invention has better gas permeability than ordinary potting containers.

The comparative experiments of gas permeability are as follows: water (with a dissolved oxygen level of 3.3ml/g after boiling treatment under negative pressure) is poured into ordinary potting container (ceramic potting container, plastic potting container and the like) and the anti-penetration gas permeable potting container of embodiment 1 of the present invention separately, and the water in all the above containers reaches a height of 15cm, and then the containers are sealed for storage. After 24 hours of placement, the dissolved oxygen levels of the water at the bottom of the containers are measured respectively (at the same temperature), and the results are 10.5ml/g for the potting container of the present invention, and 3.3ml/g, 3.4ml/g, 3.2ml/g respectively for ordinary potting container (ceramic potting container, plastic potting container and the like). It is indicated that the potting container of the present invention is able to supplement dissolved oxygen in water through its gas permeability.

On the other hand, the sizes of liquid water molecules are much larger than that of the pores between aggregate particles, so that it is very difficult for water molecules to pass through under low pressure. Moreover, the aggregate particles of the potting container are bound together with hydrophobic binder, which has a repulsive effect against water molecules, ensuring anti-penetration property of the potting container.

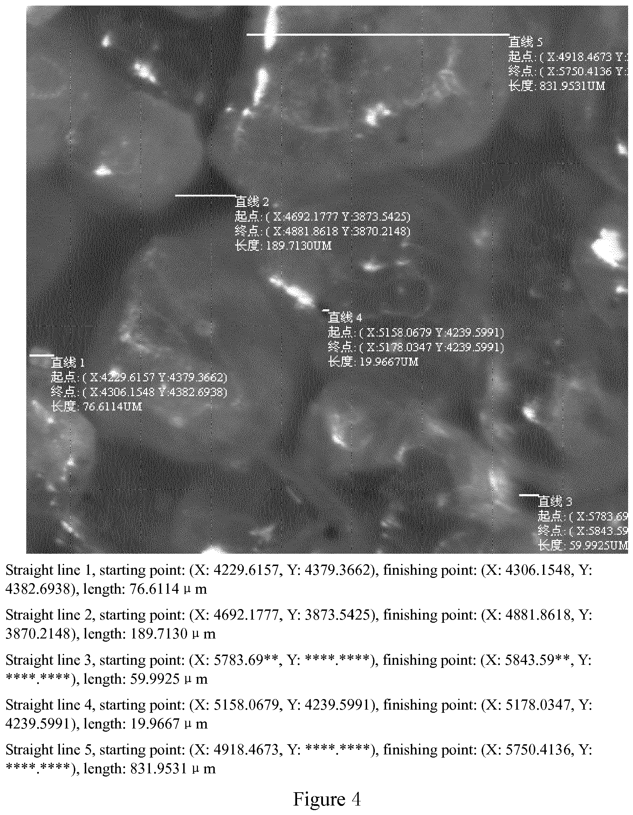

Figure 4 shows the microcosmic surface of the potting container of Embodiment 1 of the present invention. Through measurement of pores between the aggregate particles, it is indicated that their sizes are in the scope of 0.01∼0.2mm. Combined with the hydrophobic resin on the surface of the aggregate particles and the specific repulsive effect against water of the hydrophobic binder, the potting container with the aforementioned pore sizes can prevent water inside the container from leakage.

Meanwhile, air holes are not opened on this potting container, which ensures the uniformity of top-to-bottom water infiltration when watering and has better water-retention capacity, compared to draining through air holes directly when watering as in the prior art.

The potting planting container of the present invention is formed by laying a base anti-penetration layer and a lateral anti-penetration layer inside the aforementioned anti-penetration gas permeable potting container, and the base anti-penetration layer and lateral anti-penetration layer are formed of waterproof gas permeable particles, and pores which allow gas molecules to penetrate and liquid water molecules not to penetrate are formed between adjacent waterproof gas permeable particles and distributed thoroughly on the base anti-penetration layer and the lateral anti-penetration layer. The waterproof gas permeable particles consist of aggregate particles and hydrophobic materials coated on the aggregate particles, and the grain sizes of the aggregate particles are 0.04∼0.85mm. Material science tells us that, the sizes of pores between particles are generally at the same (or adjacent) order of magnitude as the sizes of the particles. The pore sizes between aggregate particles after bonding are at the magnitude of 10⁻¹∼10⁻³mm. As shown under microscopy, the pore sizes between the aggregate particles of the base anti-penetration layer and the lateral anti-penetration layer are between 0.001∼0.3mm. The sizes of gas molecules (O₂, CO₂, etc.) in the air are below the order of magnitude of 10⁻¹mm, thus gas molecules in the air can easily pass through surface pores of the potting container of the present invention, ensuring gas permeability of the potting planting container.

Anti-penetration layer, formed of waterproof gas permeable particles with anti-penetration gas permeable properties, are provided at the bottom and lateral side of the potting planting container. The waterproof gas permeable particles comprise aggregate particles and hydrophobic substance coated on the aggregate particles which can effectively prevent water from leakage. Even under the circumstance of oversaturated watering, water leakage through the bottom and lateral side of the potting planting container can be prevented, thus the water needed for plant growth is maintained. Meanwhile, air holes are not opened on this potting planting container, which ensures the uniformity of top-to-bottom water infiltration when watering and has better water-retention capacity compared to draining through air holes directly when watering as in the prior art.

### Brief Description of the Drawings

In order to illustrate the present invention more clearly, detailed description is further presented below, together with specific embodiments and accompanying drawings, wherein,
Figure 1 is a view of the potting planting container of the present invention;
Figure 2 is a view of the potting planting container with a lateral anti-penetration layer;
Figure 3 is a view of the potting of the present invention;
Figure 4 is a photo of the microcosmic surface of the potting container of the present invention (under microscope).

The marking numbers in the accompanying drawings refer to:
1-potting container, 2-base anti-penetration layer, 4-crude sand, 5-organic matter, 6-lateral anti-penetration layer

### Detailed Description

The hydrophobic substance in the embodiments is hydrophobic resin film, which is formed of hydrophobic epoxy resin, phenolic resin, polyurethane resin, silicon resin or mixtures thereof. Preferably, said hydrophobic epoxy resin is selected from the group consisting of glycidyl ether epoxy resin, glycidyl ester epoxy resin, glycidyl amine epoxy resin, linear aliphatic epoxy resin, cycloaliphatic epoxy resin, polysulfide rubber modified epoxy resin, polyamide resin modified epoxy resin, polyvinyl alcohol tertiary butyl aldehyde modified epoxy resin, butyronitrile rubber modified epoxy resin, phenolic resin modified epoxy resin, polyester resin modified epoxy resin, urine aldehyde melamine resin modified epoxy resin, furfural resin modified epoxy resin, vinyl resin modified epoxy resin, isocyanate modified epoxy resin, silicon resin modified epoxy resin ; said hydrophobic phenolic resin is selected from the group consisting of dimethylbenzene modified phenolic resin, epoxy modified phenolic resin and organic silicon modified phenolic resin.

Furthermore, the hydrophobic resin can be obtained through the following modification method:
Epoxy, such as phthalic anhydride or maleic anhydride, is copolymerized with oil soluble monomer, which is alkyl acrylates, alkyl methacrylate, ethyl acrylic acid, vinyl acetate, allyl acetate, sodium ethylenesulphonate, methyl vinyl ether, methyl allyl ether, dimethylaminoethyl methacrylate, dimethylaminoethyl acrylate, dimethylamino propyl acrylate, diethylamino propyl acrylate, dimethylamino butyl acrylate, dimethylaminoethyl methacrylate or diethylaminoethyl methacrylate.

Alternatively, epoxy resin is graft modified to form graft polymer, the hydrophilic group of epoxy, e.g. hydroxyl, is reacted with hydrophobic functional monomer to be connected. The hydrophobic functional monomer is benzaldehyde or alkyl benzaldehyde (a broad category), and the reaction between hydroxyl and aldehyde group is utilized.

Alternatively, epoxy resin undergoes substitution reaction, by means of bringing chlorine into substitution reaction under photo-catalysis to connect halogen to epoxy, so as to improve hydrophobic property.

Moreover, curing agents can be added into the hydrophobic resin film, and different curing agents are added into different resins, wherein, the choices of curing agents are as follows:
For glycidyl ether epoxy resin, glycidyl ester epoxy resin, glycidyl amine epoxy resin, linear aliphatic epoxy resin, cycloaliphatic epoxy resin, polysulfide rubber modified epoxy resin, polyamide resin modified epoxy resin, polyvinyl alcohol tertiary butyl aldehyde modified epoxy resin, butyronitrile rubber modified epoxy resin, phenolic resin modified epoxy resin, polyester resin modified epoxy resin, melamine urea-formaldehyde resin modified epoxy resin, furfural resin modified epoxy resin, vinyl resin modified epoxy resin, isocyanate modified epoxy resin or silicon resin modified epoxy resin, the preferred curing agent is aliphatic amine, cycloaliphatic amine, aromatic amine, polyamide, acid anhydride, tertiary amine or mixtures thereof;
For dimethylbenzene modified phenolic resin, epoxy modified phenolic resin or organic silicon modified phenolic resin, the preferred curing agent is hexamethylene tetramine;
For organic silicon resin, the preferred curing agent is dibutyltin dilaurate, N, N, N', N'-tetramethyl guanidine salt, or mixtures thereof;
For hydrophobic polyurethane resin, the curing agent is adduct of toluene diisocynate (TDI) and trimethoprim (TMP), prepolymer of TDI and hydroxyl-containing components, mono-component moisture curing agent or tripolymer of TDI.

For unsaturated polyester (polymer of terephthalic acid and glycol), the curing agent added at room temperature is dioxirane or cobalt naphthenate; the curing agent added while heating is tert-butyl peroxybenzoate, peroxydicarbonate, dialkyl peroxide, peroxide octylic acid tert-hexyl ester, peroxydicarbonate diester or mixtures thereof.

Moreover, the hydrophobic substance can also be polytetrafluoroethylene, plant oil, silicone, siloxane, hydrocarbon, co-polyvinylidene chloride, and mixtures thereof. Preferably, the hydrocarbon is selected from the group consisting of paraffin, kerosene, diesel, crude oil, petroleum distillate, solvent oil and aliphatic solvent.

Wherein, the hydrophobic substance is coated onto the aggregate particles, and the coating method is spraying, dipping, or chemical coating by immersing aggregate particles in the liquid solution of the hydrophobic substance; or coating thin film sheets of hydrophobic substance onto aggregate particles; or fusing hydrophobic substance into aggregate particles by placing heated aggregate particles in the hydrophobic substance; or electroplating, plasma spraying, sputtering, fluidization, as well as powder coating.

### Embodiment 1

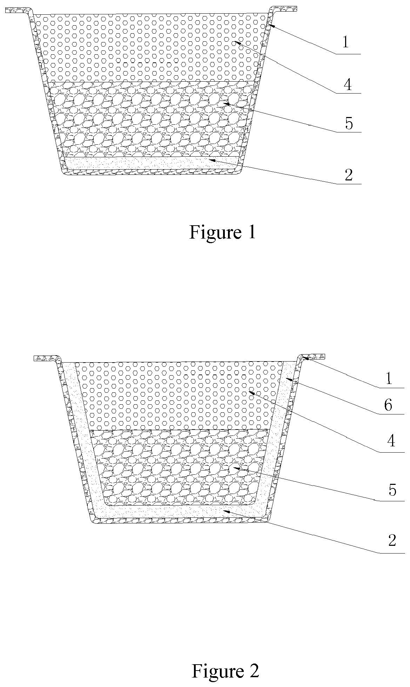

The structure of the potting planting container of this embodiment is shown in Figure 1, which includes a potting container 1 with an open-ended cavity, a base anti-penetration layer 2 and a cultivating layer. The base anti-penetration layer 2 is provided at the bottom of the potting container 1, and the cultivating layer is laid on the base anti-penetration layer 2. The cultivating layer includes crude sand 4 in the upper part and organic matter 5 in the lower part. The crude sand 4 is aeolianite and the organic matter 5 is animal waste and/or kitchen waste.

The potting container 1 is made by bonding waterproof gas permeable particles with hydrophobic binder. Pores of 0.01∼0.2mm are formed between adjacent waterproof gas permeable particles, and the pores are thoroughly distributed on the potting container 1. Pores of this size scope can allow gas molecules to pass through smoothly, and effectively prevent liquid water molecules from penetrating.

The base anti-penetration layer 2 is a layer of waterproof gas permeable particles. According to the invention pores of 0.01∼0.2mm are formed between adjacent waterproof gas permeable particles, and the pores are thoroughly distributed on the base anti-penetration layer 2. Pores of this size scope can allow gas molecules to pass through smoothly, and effectively prevent liquid water molecules from penetrating.

Wherein, the waterproof gas permeable particles constituting the potting container 1 are the same as the particles constituting the base anti-penetration layer 2.

The waterproof gas permeable particles are aggregate particles. According to the invention the aggregate particles are quartz sand and slag mixed at the weight ratio of 5:1, and the grain sizes of the quartz sand are 0.075∼0.3mm, while the grain sizes of the slag are 0.1∼0.3mm.

The hydrophobic binder is polyester resin of bisphenol A type saturated polyester resin.

The potting container 1 is prepared by the following method:
a. mixing aggregate particles and bisphenol A type saturated polyester resin at the weight ratio of 99:1, and then pouring them into a blender to stir uniformly;
b. pouring the aggregate particles bound with said hydrophobic binder into a forming mould of potting container;
c. curing the aggregate particles bound with said hydrophobic binder of step b at 5°C for 48 hours, and demolding to obtain the potting container.

### Embodiment 2

The structure of the potting planting container of this embodiment is shown in Figure 1. The cultivating layer of this embodiment is the same as that of Embodiment 1.

The potting container 1 is made by bonding waterproof gas permeable particles with hydrophobic binder. According to the invention pores of 0.01∼0.2mm are formed between adjacent waterproof gas permeable particles, and the pores are thoroughly distributed on the potting container 1. Pores of this size scope can allow gas molecules to pass through smoothly, and effectively prevent liquid water molecules from penetrating.

The waterproof gas permeable particles constituting the potting container 1 are the same as the particles constituting the base anti-penetration layer 2. The waterproof gas permeable particles include aggregate particles and hydrophobic polytetrafluoroethylene coated on the aggregate particles. According to the invention the aggregate particles are quartz sand and ceramsite mixed at the weight ratio of 4:2, and the grain sizes of the quartz sand are 0.1∼0.3mm, while the grain sizes of the ceramsite are 0.075∼0.3mm. The amount of the hydrophobic polytetrafluoroethylene is 3wt. % of the aggregate particles.

The method of coating the hydrophobic polytetrafluoroethylene onto the aggregate particles is as follows:
1) heating the hydrophobic polytetrafluoroethylene to a molten state;
2) heating the aggregate particles heated to 210 °C and adding said hydrophobic polytetrafluoroethylene into the heated aggregate psrticles, and stirring uniformly for 30 seconds to distribute said hydrophobic polytetrafluoroethylene onto the surface of said aggregate particles uniformly;
3) adding hexamethylene tetramine as a curing agent (0.015wt.% of the aggregate particles) into the aforementioned mixture prepared, stirring uniformly, and curing for 60 seconds;
4) adding oxidized polyethylene wax as a lubricating agent (0.009wt.% of the aggregate particles) into the cured mixture, stirring uniformly, cooling, and sieving to obtain the coated particles.

The hydrophobic binder is phenolic resin of rosin modified phenolic resin. The potting container 1 is prepared by the following method:
a. mixing aggregate particles coated with hydrophobic polytetrafluoroethylene and said hydrophobic binder at the weight ratio of 97:3, and then pouring them into a blender to stir uniformly;
b. pouring the aggregate particles bound with said hydrophobic binder into a forming mould of potting container;
c. curing the aggregate particles bound with said hydrophobic binder of step b at room temperature for 2 hours, and demolding to obtain the potting container.

### Embodiment 3

Another implementation way of the potting planting container is shown in Figure 2, which includes a potting container 1 with an open-ended cavity, a base anti-penetration layer 2 and a cultivating layer. The base anti-penetration layer 2 is provided at the bottom of the potting container 1, and the cultivating layer is laid on the base anti-penetration layer 2. The base anti-penetration layer 2 is a layer of waterproof gas permeable particles. A lateral anti-penetration layer 6 is laid between the lateral side of the cultivating layer and the wall of the potting container 1, to prevent lateral leakage through the lateral wall of the potting container. Pores of 0.05∼0.2mm are formed between adjacent waterproof gas permeable particles, and the pores are thoroughly distributed on the base anti-penetration layer 2 and the lateral anti-penetration layer 6. Pores of this size scope can allow gas molecules to pass through smoothly, and effectively prevent liquid water molecules from penetrating.

The cultivating layer includes crude sand 4 in the upper part and organic matter 5 in the lower part, wherein, the crude sand 4 is aeolianite and the organic matter 5 is animal waste and/or kitchen waste.

The waterproof gas permeable particles are aggregate particles. According to the invention the aggregate particles are ceramsite and glass beads mixed at the weight ratio of 2:1, and the grain sizes of the ceramsite are 0.075∼0.6mm, while the grain sizes of the glass beads are 0.04∼0.15mm.

The potting container 1 is made by bonding waterproof gas permeable particles with hydrophobic binder. According to the invention pores of 0.02∼0.2mm are formed between adjacent waterproof gas permeable particles, and the pores are thoroughly distributed on the potting container 1. Pores of this size scope can allow gas molecules to pass through smoothly, and effectively prevent liquid water molecules from penetrating.

The waterproof gas permeable particles constituting the potting container 1 are the same as the particles constituting the base anti-penetration layer 2 and the lateral anti-penetration layer 6.

The hydrophobic binder is 2,2-bisphenol-hexafluoropropane diglycidyl ether of fluorine-containing epoxy binder.

The potting container 1 is prepared by the following method:
a. mixing aggregate particles and said hydrophobic binder at the weight ratio of 98.5:1.5, and then pouring them into a blender to stir uniformly;
b. pouring the aggregate particles bound with said hydrophobic binder into a forming mould of potting container;
c. curing the aggregated particles bound with said hydrophobic binder of step b at 50°C for 10 hours, and demolding to obtain the potting container.

### Embodiment 4

The potting planting container of this embodiment is shown in Figure 2. The base anti-penetration layer 2, the lateral anti-penetration layer 6 and the cultivating layer of this embodiment is the same as that of Embodiment 3.

The potting container 1 used herein is made by bonding waterproof gas permeable particles together with hydrophobic binder. According to the invention pores of 0.02∼ 0.15mm are formed between adjacent waterproof gas permeable particles, and the pores are thoroughly distributed on the potting container 1. Pores of this size scope can allow gas molecules to pass through smoothly, and effectively prevent liquid water molecules from penetrating.

The waterproof gas permeable particles constituting the potting container 1 include aggregate particles and hydrophobic phenolic resin coated on the aggregate particles. According to the invention the aggregate particles are quartz sand and glass beads mixed at the weight ratio of 5:1, and the grain sizes of the quartz sand are 0.075∼0.3mm, while the grain sizes of the glass beads are 0.04∼0.15mm. The amount of the hydrophobic phenolic resin is 1wt.% of the aggregate particles. Said hydrophobic phenolic resin is obtained by copolymerizing maleic anhydride and sodium ethylenesulphonate.

The method of coating the hydrophobic phenolic resin onto the aggregate particles is as follows:
1) heating phenolic resin to a molten state;
2) heating the aggregate particles to 220°C and adding said phenolic resin into the heated aggregate particles, and stirring uniformly for 60 seconds to distribute said phenolic resin onto the surface of said aggregate particles uniformly;
3) adding aliphatic amine as a curing agent (10wt.% of the aggregate particles) into the aforementioned mixture prepared, stirring uniformly, and curing for 120 seconds;
4) adding stearic amide as a lubricating agent (1.25wt.% of the aggregate particles) into the cured mixture, stirring uniformly, cooling, and sieving to obtain the coated particles.

The hydrophobic binder is phenolic resin of rosin modified phenolic resin.

The potting container 1 is prepared by the following method:
a. mixing aggregate particles coated with phenolic resin and said hydrophobic binder at the weight ratio of 96:4, and then pouring them into a blender to stir uniformly;
b. pouring the aggregate particles bound with said hydrophobic binder into a forming mould of potting container;
c. curing the aggregate particles bound with said hydrophobic binder of step b at 120°C for 1 hour, and demolding to obtain the potting container.

### Embodiment 5∼8

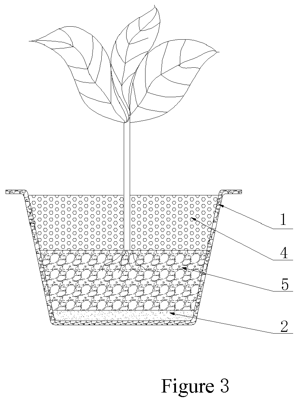

The potting of the present invention is shown in Figure 3. It includes the aforementioned potting planting container. A plant is planted in said potting planting container, especially in the cultivating layer on the base anti-penetration layer 2. The structures of the potting planting containers of Embodiments 5∼8 are in accordance with the potting containers of Embodiments 1∼4, respectively.

As alternative implementation ways, the aforementioned hydrophobic binder can also be polyester resin or phenolic resin.

The hydrophobic substance coated on the aggregate particles can also be hydrophobic resin film, which is formed of hydrophobic epoxy resin, phenolic resin, polyurethane resin, silicon resin or mixtures thereof.

Obviously, the aforementioned embodiments are merely intended for clearly describing the examples, rather than limiting the implementation scope of the invention. For those skilled in the art, various changes and modifications in other different forms can be made on the basis of the aforementioned description. The scope of the invention is only limited by the appended claims.

## Claims

1. An anti-penetration and gas permeable potting container, with an open-ended cavity, wherein,
said potting container is made by bonding aggregate particles with hydrophobic binder, and pores which allow gas molecules to penetrate and liquid water molecules not to penetrate are formed between adjacent said aggregate particles,
wherein,
said aggregate particles are quartz sand and slag mixed at the weight ratio of 5:1, the grain sizes of the quartz sand are 0.075-0.3mm, the grain sizes of the slag are 0.1-0.3mm, and pores of 0.01-0.2mm are formed between adjacent aggregate particles and are thoroughly distributed on the potting container; or
said aggregate particles are quartz sand and ceramsite mixed at the weight ratio of 4:2, the grain sizes of the quartz sand are 0.1-0.3mm, the grain sizes of the ceramsite are 0.075-0.3mm, and pores of 0.01-0.2mm are formed between adjacent aggregate particles and are thoroughly distributed on the potting container; or
said aggregate particles are ceramsite and glass beads mixed at the weight ratio of 2:1, the grain sizes of the ceramsite are 0.075-0.6mm, the grain sizes of the glass beads are 0.04-0.15mm, and pores of 0.02-0.2mm are formed between adjacent aggregate particles and are thoroughly distributed on the potting container; or
said aggregate particles are quartz sand and glass beads mixed at the weight ratio of 5:1, and the grain sizes of the quartz sand are 0.075-0.3mm, while the grain sizes of the glass beads are 0.04-0.15mm, and pores of 0.02-0.15mm are formed between adjacent aggregate particles and are thoroughly distributed on the potting container.

2. The anti-penetration and gas permeable potting container of claim 1, wherein,
said hydrophobic binder is selected from the group consisting of fluorine-containing epoxy resinous binder, silicon-containing epoxy resinous binder, organic silicon binder, polyurethane, polyester resin and phenolic resin.

3. The anti-penetration and gas permeable potting container of claim 1 or 2, wherein,
said aggregate particles are coated with hydrophobic substance.

4. The anti-penetration and gas permeable potting container of claim 3, wherein,
said hydrophobic substance is hydrophobic resin film coated on said aggregate particles, and said hydrophobic resin film is formed from hydrophobic epoxy resin, phenolic resin, polyurethane resin, silicon resin or mixtures thereof.

5. The anti-penetration and gas permeable potting container of claim 4, wherein,
said hydrophobic substance is selected from the group consisting of polytetrafluoroethylene, plant oil, silicone, siloxane, hydrocarbon and copolymer of polyvinylidene chloride;
said hydrocarbon is selected from the group consisting of paraffin, kerosene, diesel, crude oil, petroleum distillate, solvent oil and aliphatic solvent.

6. A preparation method of the anti-penetration and gas permeable potting container of any of claims 1-5, wherein,
said method includes the following steps,
a. mixing aggregate particles with hydrophobic binder, and pouring the mixture into a blender to stir uniformly;
b. pouring the aggregate particles coated with hydrophobic binder into a forming mould of potting container;
c. curing and molding said aggregate particles coated with hydrophobic binder and demolding to obtain said potting container,
wherein,
said aggregate particles are quartz sand and slag mixed at the weight ratio of 5:1, the grain sizes of the quartz sand are 0.075-0.3mm, the grain sizes of the slag are 0.1-0.3mm, and pores of 0.01-0.2mm are formed between adjacent aggregate particles and are thoroughly distributed on the potting container; or
said aggregate particles are quartz sand and ceramsite mixed at the weight ratio of 4:2, the grain sizes of the quartz sand are 0.1-0.3mm, the grain sizes of the ceramsite are 0.075-0.3mm, and pores of 0.01-0.2mm are formed between adjacent aggregate particles and are thoroughly distributed on the potting container; or
said aggregate particles are ceramsite and glass beads mixed at the weight ratio of 2:1, the grain sizes of the ceramsite are 0.075-0.6mm, the grain sizes of the glass beads are 0.04-0.15mm, and pores of 0.02-0.2mm are formed between adjacent aggregate particles and are thoroughly distributed on the potting container; or
said aggregate particles are quartz sand and glass beads mixed at the weight ratio of 5:1, and the grain sizes of the quartz sand are 0.075-0.3mm, while the grain sizes of the glass beads are 0.04-0.15mm, and pores of 0.02-0.15mm are formed between adjacent aggregate particles and are thoroughly distributed on the potting container.

7. The preparation method of claim6, wherein,
said aggregate particles are coated with hydrophobic substance.

8. The preparation method of claim 6 or 7, wherein,
in said curing-molding step, said aggregate particles coated with hydrophobic binder in potting container are placed at a temperature of 5-120°C for 1-48 hours.

9. A potting planting container comprising the potting container of any of claims 1-5, being provided with a cultivating layer, wherein,
a base anti-penetration layer (2), formed of waterproof gas permeable particles, is provided between said potting container (1) and the bottom of said cultivating layer, and pores which allow gas molecules to penetrate and liquid water molecules not to penetrate are formed between said adjacent waterproof gas permeable particles, and said pores are distributed thoroughly on said base anti-penetration layer (2).

10. The potting planting container of claim 9, wherein,
a lateral anti-penetration layer (6), formed of waterproof gas permeable particles, is provided between the wall of said potting container (1) and the lateral side of said cultivating layer, and pores which allow gas molecules to penetrate and liquid water molecules not to penetrate are formed between said adjacent waterproof gas permeable particles and distributed thoroughly on said lateral anti-penetration layer (6).

11. The potting planting container of claim 9 or 10, wherein,
said waterproof gas permeable particles include aggregate particles and hydrophobic substance coated on said aggregate particles.

12. The potting planting container of claim 11, wherein,
said aggregate particles are selected from the group consisting of quartz sand, slag, ceramsite and glass beads; the grain sizes of said aggregate particles are 0.04-0.85mm.

13. A potting , wherein,
said potting includes the potting planting container of any of claims 9-12;
and a plant is planted in said potting planting container, said plant is planted in the cultivating layer above said base anti-penetration layer (2).

## Patentansprüche

1. Penetrationshemmender und gasdurchlässiger Pflanzentopf mit einem Hohlraum mit offenem Ende, wobei
der Pflanzentopf durch Binden von Aggregatteilchen mit hydrophobem Bindemittel hergestellt wird und Poren, die erlauben, dass Gasmoleküle durchgelassen werden und flüssige Wassermoleküle nicht durchgelassen werden, zwischen benachbarten Aggregatteilchen gebildet werden,
wobei
die Aggregatteilchen Quarzsand und Schlacke sind, gemischt im Gewichtsverhältnis 5:1, wobei die Korngrößen des Quarzsands 0,075-0,3 mm betragen, die Korngrößen der Schlacke 0,1-0,3 mm betragen und Poren von 0,01-0,2 mm zwischen benachbarten Aggregatteilchen gebildet werden und gründlich auf dem Pflanzentopf verteilt werden; oder
die Aggregatteilchen Quarzsand und Blähton sind, gemischt im Gewichtsverhältnis 4:2, wobei die Korngrößen des Quarzsands 0,1-0,3 mm betragen, die Korngrößen des Blähtons 0,075-0,3 mm betragen und Poren von 0,01-0,2 mm zwischen benachbarten Aggregatteilchen gebildet werden und gründlich auf dem Pflanzentopf verteilt werden; oder
die Aggregatteilchen Blähton und Glaskügelchen sind, gemischt im Gewichtsverhältnis 2:1, wobei die Korngrößen des Blähtons 0,075-0,6 mm betragen, die Korngrößen der Glaskügelchen 0,04-0,15 mm betragen und Poren von 0,02-0,2 mm zwischen benachbarten Aggregatteilchen gebildet werden und gründlich auf dem Pflanzentopf verteilt werden; oder
die Aggregatteilchen Quarzsand und Glaskügelchen sind, gemischt im Gewichtsverhältnis 5:1, und wobei die Korngrößen des Quarzsands 0,075-0,3 mm betragen, die Korngrößen der Glaskügelchen 0,04-0,15 mm betragen und Poren von 0,02-0,15 mm zwischen benachbarten Aggregatteilchen gebildet werden und gründlich auf dem Pflanzentopf verteilt werden.

2. Penetrationshemmender und gasdurchlässiger Pflanzentopf nach Anspruch 1, wobei
das hydrophobe Bindemittel ausgewählt ist aus der Gruppe bestehend aus fluorhaltigem Epoxyharzbindemittel, silikonhaltigem Epoxyharzbindemittel, organischem Silikonbindemittel, Polyurethan, Polyesterharz und Phenolharz.

3. Penetrationshemmender und gasdurchlässiger Pflanzentopf nach Anspruch 1 oder 2, wobei
die Aggregatteilchen mit einer hydrophoben Substanz beschichtet sind.

4. Penetrationshemmender und gasdurchlässiger Pflanzentopf nach Anspruch 3, wobei
die hydrophobe Substanz ein hydrophober Harzfilm ist, mit dem die Aggregatteilchen beschichtet sind, und der hydrophobe Harzfilm aus hydrophobem Epoxyharz, Phenolharz, Polyurethanharz, Silikonharz oder Gemischen davon gebildet ist.

5. Penetrationshemmender und gasdurchlässiger Pflanzentopf nach Anspruch 4, wobei
die hydrophobe Substanz ausgewählt ist aus der Gruppe bestehend aus Polytetrafluorethylen, Pflanzenöl, Silikon, Siloxan, Kohlenwasserstoff und Copolymer von Polyvinylidenchlorid;
wobei der Kohlenwasserstoff ausgewählt ist aus der Gruppe bestehend aus Paraffin, Kerosin, Diesel, Rohöl, Erdöldestillat, Lösungsöl und aliphatischem Lösungsmittel.

6. Herstellungsverfahren für den penetrationshemmenden und gasdurchlässigen Pflanzentopf nach einem der Ansprüche 1-5, wobei
das Verfahren die folgenden Schritte beinhaltet:
a. Mischen von Aggregatteilchen mit hydrophobem Bindemittel und Gießen des Gemischs in einen Mixer, um gleichmäßig zu rühren;
b. Gießen der mit dem hydrophoben Bindemittel beschichteten Aggregatteilchen in ein Pflanzentopf-Formwerkzeug;
c. Härten und Formen der mit dem hydrophoben Bindemittel beschichteten Aggregatteilchen und Entformen, um den Pflanzentopf zu erhalten,
wobei
die Aggregatteilchen Quarzsand und Schlacke sind, gemischt im Gewichtsverhältnis 5:1, wobei die Korngrößen des Quarzsands 0,075-0,3 mm betragen, die Korngrößen der Schlacke 0,1-0,3 mm betragen und Poren von 0,01-0,2 mm zwischen benachbarten Aggregatteilchen gebildet werden und gründlich auf dem Pflanzentopf verteilt werden; oder
die Aggregatteilchen Quarzsand und Blähton sind, gemischt im Gewichtsverhältnis 4:2, wobei die Korngrößen des Quarzsands 0,1-0,3 mm betragen, die Korngrößen des Blähtons 0,075-0,3 mm betragen und Poren von 0,01-0,2 mm zwischen benachbarten Aggregatteilchen gebildet werden und gründlich auf dem Pflanzentopf verteilt werden; oder
die Aggregatteilchen Blähton und Glaskügelchen sind, gemischt im Gewichtsverhältnis 2:1, wobei die Korngrößen des Blähtons 0,075-0,6 mm betragen, die Korngrößen der Glaskügelchen 0,04-0,15 mm betragen und Poren von 0,02-0,2 mm zwischen benachbarten Aggregatteilchen gebildet werden und gründlich auf dem Pflanzentopf verteilt werden; oder
die Aggregatteilchen Quarzsand und Glaskügelchen sind, gemischt im Gewichtsverhältnis 5:1, und wobei die Korngrößen des Quarzsands 0,075-0,3 mm betragen, die Korngrößen der Glaskügelchen 0,04-0,15 mm betragen und Poren von 0,02-0,15 mm zwischen benachbarten Aggregatteilchen gebildet werden und gründlich auf dem Pflanzentopf verteilt werden.

7. Herstellungsverfahren nach Anspruch 6, wobei
die Aggregatteilchen mit hydrophober Substanz beschichtet werden.

8. Herstellungsverfahren nach Anspruch 6 oder 7, wobei beim Härte-Form-Schritt die mit dem hydrophoben Bindemittel beschichteten Aggregatteilchen für 1-48 Stunden bei einer Temperatur von 5-120 °C im Pflanzentopf platziert werden.

9. Pflanzenpflanztopf, umfassend den Pflanzentopf nach einem der Ansprüche 1-5, der mit einer Kultivierungsschicht versehen ist, wobei
eine penetrationshemmende Grundschicht (2), die aus wasserdichten gasdurchlässigen Teilchen gebildet ist, zwischen dem Pflanzentopf (1) und dem Boden der Kultivierungsschicht bereitgestellt ist, und Poren, die erlauben, dass Gasmoleküle durchgelassen werden und flüssige Wassermoleküle nicht durchgelassen werden, zwischen den benachbarten wasserdichten gasdurchlässigen Teilchen gebildet werden und die Poren gründlich auf der penetrationshemmenden Grundschicht (2) verteilt werden.

10. Pflanzenpflanztopf nach Anspruch 9, wobei eine penetrationshemmende laterale Schicht (6), die aus wasserdichten gasdurchlässigen Teilchen gebildet ist, zwischen der Wand des Pflanzentopfs (1) und der Lateralseite der Kultivierungsschicht bereitgestellt ist, und Poren, die erlauben, dass Gasmoleküle durchgelassen werden und flüssige Wassermoleküle nicht durchgelassen werden, zwischen den benachbarten wasserdichten gasdurchlässigen Teilchen gebildet werden und gründlich auf der penetrationshemmenden lateralen Schicht (6) verteilt werden.

11. Pflanzenpflanztopf nach Anspruch 9 oder 10, wobei
die wasserdichten gasdurchlässigen Teilchen Aggregatteilchen und hydrophobe Substanz, mit der die Aggregatteilchen beschichtet sind, beinhalten.

12. Pflanzenpflanztopf nach Anspruch 11, wobei
die Aggregatteilchen ausgewählt sind aus der Gruppe bestehend aus Quarzsand, Schlacke, Blähton and Glaskügelchen; wobei die Korngrößen der Aggregatteilchen 0,04-0,85 mm betragen.

13. Einpflanzen, wobei
das Einpflanzen einen Pflanzenpflanztopf nach einem der Ansprüche 9-12 beinhaltet;
und eine Pflanze in den Pflanzenpflanztopf gepflanzt wird, wobei die Pflanze in die Kultivierungsschicht über der penetrationshemmenden Grundschicht (2) gepflanzt wird.

## Revendications

1. Récipient d'empotage anti-pénétration et perméable au gaz, comportant une cavité à extrémité ouverte,
ledit récipient d'empotage étant fabriqué par la liaison de particules d'agrégat avec un liant hydrophobe, et des pores, qui permettent aux molécules de gaz de pénétrer et aux molécules d'eau liquide de ne pas pénétrer, étant formés entre lesdites particules d'agrégat adjacentes,
lesdites particules d'agrégat étant du sable de quartz et des scories mélangés selon le rapport pondéral de 5:1, les grosseurs de grain du sable de quartz étant de 0,075 à 0,3 mm, les grosseurs de grain des scories étant de 0,1 à 0,3 mm, et des pores de 0,01 à 0,2 mm étant formés entre des particules d'agrégat adjacentes et étant distribués sur tout le récipient d'empotage ; ou
lesdites particules d'agrégat étant du sable de quartz et de la céramsite mélangés selon le rapport pondéral de 4:2, les grosseurs de grain du sable de quartz étant de 0,1 à 0,3 mm, les grosseurs de grain de la céramsite étant de 0,075 à 0,3 mm, et des pores de 0,01 à 0,2 mm étant formés entre des particules d'agrégat adjacentes et étant distribués sur tout le récipient d'empotage ; ou
lesdites particules d'agrégat étant de la céramsite et des billes de verre mélangées selon le rapport pondéral de 2:1, les grosseurs de grain de la céramsite étant de 0,075 à 0,6 mm, les grosseurs de grain des billes de verre étant de 0,04 à 0,15 mm, et des pores de 0,02 à 0,2 mm étant formés entre des particules d'agrégat adjacentes et étant distribués sur tout le récipient d'empotage ; ou
lesdites particules d'agrégat étant du sable de quartz et des billes de verre mélangés selon le rapport pondéral de 5:1, et les grosseurs de grain du sable de quartz étant de 0,075 à 0,3 mm, alors que les grosseurs de grain des billes de verre sont de 0,04 à 0,15 mm, et des pores de 0,02 à 0,15 mm étant formés entre des particules d'agrégat adjacentes et étant distribués sur tout le récipient d'empotage.

2. Récipient d'empotage anti-pénétration et perméable au gaz selon la revendication 1, ledit liant hydrophobe étant choisi dans le groupe constitué par un liant résineux époxy contenant du fluor, un liant résineux époxy contenant du silicium, un liant de silicium organique, un polyuréthane, une résine polyester et une résine phénolique.

3. Récipient d'empotage anti-pénétration et perméable au gaz selon la revendication 1 ou 2, lesdites particules d'agrégat étant revêtues par une substance hydrophobe.

4. Récipient d'empotage anti-pénétration et perméable au gaz selon la revendication 3, ladite substance hydrophobe étant revêtue en un film de résine hydrophobe sur lesdites particules d'agrégat, et ledit film de résine hydrophobe étant formé à partir de résine époxy hydrophobe, de résine phénolique, de résine de polyuréthane, de résine de silicium ou de mélanges correspondants.

5. Récipient d'empotage anti-pénétration et perméable au gaz selon la revendication 4, ladite substance hydrophobe étant choisie dans le groupe constitué par le polytétrafluoroéthylène, une huile végétale, une silicone, un siloxane, un hydrocarbure et un copolymère de poly(chlorure de vinylidène ;
ledit hydrocarbure étant choisi dans le groupe constitué par la paraffine, le kérosène, le diesel, le pétrole brut, un distillat de pétrole, une huile solvant et un solvant aliphatique.

6. Procédé de préparation du récipient d'empotage anti-pénétration et perméable au gaz selon l'une quelconque des revendications 1 à 5,
ledit procédé comprenant les étapes suivantes,
a. mélange des particules d'agrégat avec un liant hydrophobe, et versement du mélange dans un mélangeur pour agiter uniformément ;
b. versement des particules d'agrégat revêtues par un liant hydrophobe dans un moule de mise en forme du récipient d'empotage ;
c. durcissement et moulage desdites particules d'agrégat revêtues par un liant hydrophobe et démoulage pour obtenir ledit récipient d'empotage,
lesdites particules d'agrégat étant du sable de quartz et des scories mélangés selon le rapport pondéral de 5:1, les grosseurs de grain du sable de quartz étant de 0,075 à 0,3 mm, les grosseurs de grain des scories étant de 0,1 à 0,3 mm, et des pores de 0,01 à 0,2 mm étant formés entre des particules d'agrégat adjacentes et étant distribués sur tout le récipient d'empotage ; ou
lesdites particules d'agrégat étant du sable de quartz et de la céramsite mélangés selon le rapport pondéral de 4:2, les grosseurs de grain du sable de quartz étant de 0,1 à 0,3 mm, les grosseurs de grain de la céramsite étant de 0,075 à 0,3 mm, et des pores de 0,01 à 0,2 mm étant formés entre des particules d'agrégat adjacentes et étant distribués sur tout le récipient d'empotage ; ou
lesdites particules d'agrégat étant de la céramsite et des billes de verre mélangées selon le rapport pondéral de 2:1, les grosseurs de grain de la céramsite étant de 0,075 à 0,6 mm, les grosseurs de grain des billes de verre étant de 0,04 à 0,15 mm, et des pores de 0,02 à 0,2 mm étant formés entre des particules d'agrégat adjacentes et étant distribués sur tout le récipient d'empotage ; ou
lesdites particules d'agrégat étant du sable de quartz et des billes de verre mélangés selon le rapport pondéral de 5:1, et les grosseurs de grain du sable de quartz étant de 0,075 à 0,3 mm, et que les grosseurs de grain des billes de verre sont de 0,04 à 0,15 mm, et des pores de 0,02 à 0,15 mm étant formés entre des particules d'agrégat adjacentes et étant distribués sur tout le récipient d'empotage.

7. Procédé de préparation selon la revendication 6, lesdites particules d'agrégat étant revêtues par une substance hydrophobe.

8. Procédé de préparation selon la revendication 6 ou 7, dans lequel dans ladite étape de durcissement-moulage, lesdites particules d'agrégat revêtues par un liant hydrophobe dans un récipient d'empotage étant placées à une température de 5 à 120 °C pendant 1 à 48 heures.

9. Récipient d'empotage de plantation comprenant le récipient d'empotage selon l'une quelconque des revendications 1 à 5, fournie avec une couche de culture,
une couche de base anti-pénétration (2), formée de particules étanches à l'eau perméables au gaz, étant fournie entre ledit récipient d'empotage (1) et le bas de ladite couche de culture, et des pores qui permettent aux molécules de gaz de pénétrer et aux molécules d'eau liquide de ne pas pénétrer, étant formés entre lesdites particules étanches à l'eau perméables au gaz adjacentes, et lesdits pores étant distribués sur toute ladite couche de base anti-pénétration (2).

10. Récipient d'empotage de plantation selon la revendication 9,
un couche latérale anti-pénétration (6), formée de particules étanches à l'eau perméables au gaz, étant fournie entre la paroi dudit récipient d'empotage (1) et le côté latéral de ladite couche de culture, et des pores qui permettent aux molécules de gaz de pénétrer et aux molécules d'eau liquide de ne pas pénétrer, étant formés entre lesdites particules étanches à l'eau perméables au gaz adjacentes, et étant distribués sur toute ladite couche latérale anti-pénétration (6) .

11. Récipient d'empotage de plantation selon la revendication 9 ou 10,
lesdites particules étanches à l'eau perméables au gaz comportant des particules d'agrégat et une substance hydrophobe revêtue sur lesdites particules d'agrégat.

12. Récipient d'empotage de plantation selon la revendication 11,
lesdites particules d'agrégat étant choisies dans le groupe constitué par le sable de quartz, les scories, la céramsite et les billes de verre ; les grosseurs de grain desdites particules d'agrégat étant de 0,04 à 0,85 mm.

13. Empotage,
ledit empotage comprenant le récipient de plantation selon l'une quelconque des revendications 9 à 12 ;
et une plante étant plantée dans ledit récipient d'empotage de plantation, ladite plante étant plantée dans la couche de culture au-dessus de ladite couche de base anti-pénétration (2).
